# EUROPEAN PATENT SPECIFICATION

(11) **EP 1 744 948 B1**
(45) Date of publication and mention of the grant of the patent: **11.06.2008**
(21) Application number: 04745180.2
(22) Date of filing: 21.06.2004
(51) Int. Cl.: B62L 3/02, B62L 5/06, F16D 55/228, F16D 65/14

(54) **DISC BRAKE CALIPER**
SCHEIBENBREMSENSATTEL
ETRIER DE FREIN A DISQUE

(43) Date of publication of application: 24.01.2007
(73) Proprietor: Freni Brembo S.p.A., 24035 Curno (IT)
(72) Inventor: GHERARDI, Pierangelo, I-24019 Zogno (IT); VEZZOLI, Giancarlo, I-25032 Chiari (IT)
(74) Representative: Leihkauf, Steffen Falk
(86) International application number: PCT/IT2004/000355
(87) International publication number: WO 2005/123492

(56) References cited:
- EP-A- 0 621 172
- EP-A- 1 167 805
- EP-A- 1 308 382
- JP-A- 54 098 462
- US-A- 3 183 999
- US-A- 3 708 043
- US-A- 4 754 856
- US-B1- 6 170 617
- US-B1- 6 260 670
- US-B1- 6 318 514

## Description

The subject of the present invention is a disc brake caliper, particularly for a disc brake for bicycles.

In the field of bicycles, and in the field of two-wheeled vehicles in general, it is known to use disc brakes which are provided with so-called fixed brake calipers which are usually mounted on a portion of the bicycle frame, for example, on one or both blades of the fork.

In the bicycle field, there is a particular need to limit as far as possible the size and the weight of the brake caliper as well as the space occupied thereby.

Normally, fixed brake calipers are constituted by two half-calipers. Each half-caliper has a body suitable for facing the brake disc and a portion projecting towards the median plane of the brake disc. The two projecting portions of the two half calipers are joined along that plane to form a bridge which connects the two half calipers mechanically and hydraulically. Each body which faces the brake disc houses a piston suitable for acting on respective pads.

On the contact surfaces of the two projecting portions, in the region of the duct which puts the two half calipers into hydraulic communication, it is necessary to provide a recess for housing a seal, for example, of the square-sectioned type or of the O-ring type.

This solution is not fault-free; in fact the recess for the seal has a diameter which is decidedly larger than that of the actual duct. The need to incorporate the recess and to maintain a wall around it of sufficient thickness to withstand the mechanical stresses to which the bridge is subjected requires the bridge to have a considerable thickness, which is disadvantageous with regard to the space occupied.

The caliper is fixed to the blade of the fork by means of two screws. These screws generally extend through suitable slots formed in the caliper body and are engaged in a corresponding number of threaded holes formed in a support fixed firmly to the blade of the fork. Conventionally, once the fixing screws of the brake caliper have been fitted, they are arranged in a manner such that their axes are parallel to the axis of rotation of the brake disc. This conventional fixing is therefore known as "axial" fixing.

Brake calipers in which, once the fixing screws are fitted, they are arranged in a manner such that their axes are substantially parallel to the plane defined by the brake disc are also known and are particularly highly valued. This fixing is known as "radial" fixing although, strictly speaking, the direction adopted by the axes of the screws is not always strictly radial relative to the brake disc but is often purely parallel to a radial axis. This type of fixing will be referred to below as "radial" fixing in accordance with the terminology that has become established in the field.

These known brake calipers with radial fixing are not free of drawbacks. In particular, the arrangement of the slots through which to insert the screws for fixing the caliper to the support causes the caliper to have a considerable overall circumferential dimension. The circumferential dimension of the caliper means the width of the circular sector which is occupied by the caliper and is centred on the axis of rotation of the brake disc when the caliper is mounted correctly in the operative position. In fact, the seats of the connecting screws of the two half calipers and one or more ducts which put the two half calipers into hydraulic communication are formed in the caliper body beside the cavity in which the piston is housed. It is only possible to arrange the fixing slots circumferentially outside of these seats and of the ducts between the two half calipers (see Figure 1). EP 1 167 805 discloses a caliper in accordance with the preamble of claim 1.

The object of the present invention is to devise and provide a disc brake caliper for bicycles which overcomes the disadvantages discussed above with reference to the prior art.

In particular, the task of the present invention is to provide a brake caliper for bicycles which has limited size and weight.

This object and this task are achieved by means of a brake caliper according to Claim 1.

Further characteristics and advantages of the brake caliper according to the invention will become clear from the following description of preferred embodiments which are given by way of non-limiting example with reference to the appended drawings, in which:
Figure 1 is a perspective view of a known brake caliper,
Figure 2a shows a possible embodiment of a brake caliper according to the invention, arranged in a first operating situation,
Figure 2b shows a possible embodiment of a brake caliper according to the invention arranged in a second operating situation,

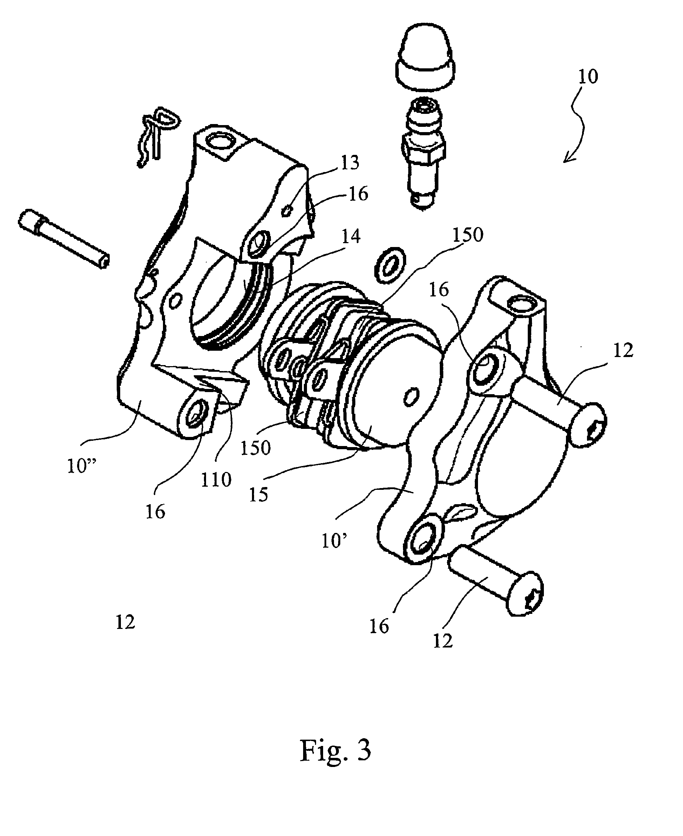

Figure 3 is an exploded view of the brake caliper of Figure 2,
Figure 4 is a side elevational view of the brake caliper of Figure 2,
Figure 5 is a view sectioned in the plane V-V of Figure 4,
Figure 6 is a view sectioned in the plane VI-VI of Figure 4,

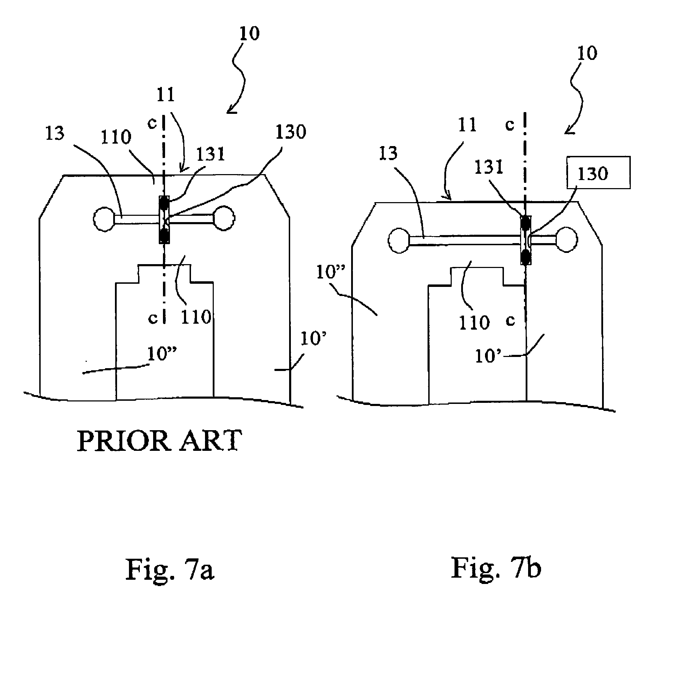

Figure 7a shows schematically a section through a known brake caliper,
Figure 7b shows schematically a section through a brake caliper according to the invention, and
Figures 8a to 8c show schematically sections through details of the fixing of the caliper of Figure 2.

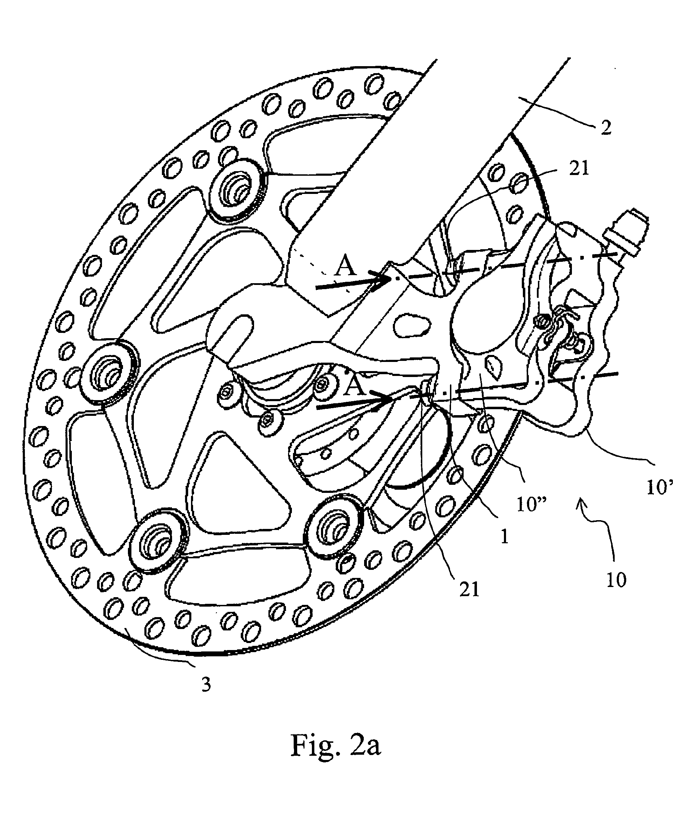

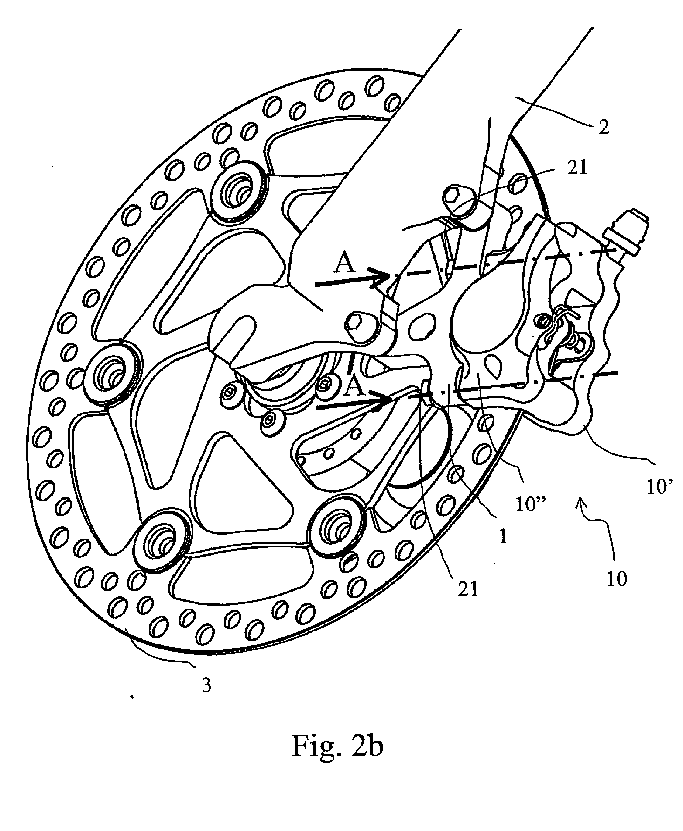

With reference to the above-mentioned drawings, a brake caliper is generally indicated 10. The caliper 10 is mounted on a support 1 fixed firmly to a portion of the bicycle frame, for example, to a blade 2 of the fork. The support 1 may equally well be formed integrally with the blade 2 or welded thereto (see, for example, Figure 2a) or may be fixed firmly thereto by means of screws (see, for example, Figure 2b).

The support 1 is shaped in a manner such that, once the caliper 10 is mounted on the support 1, the caliper 10 is arranged astride the brake disc 3. More precisely, the caliper 10 is composed of two half calipers 10' and 10" which are arranged on the axially inner side, that is, the side facing the wheel, and on the axially outer side of the brake disc 3, respectively.

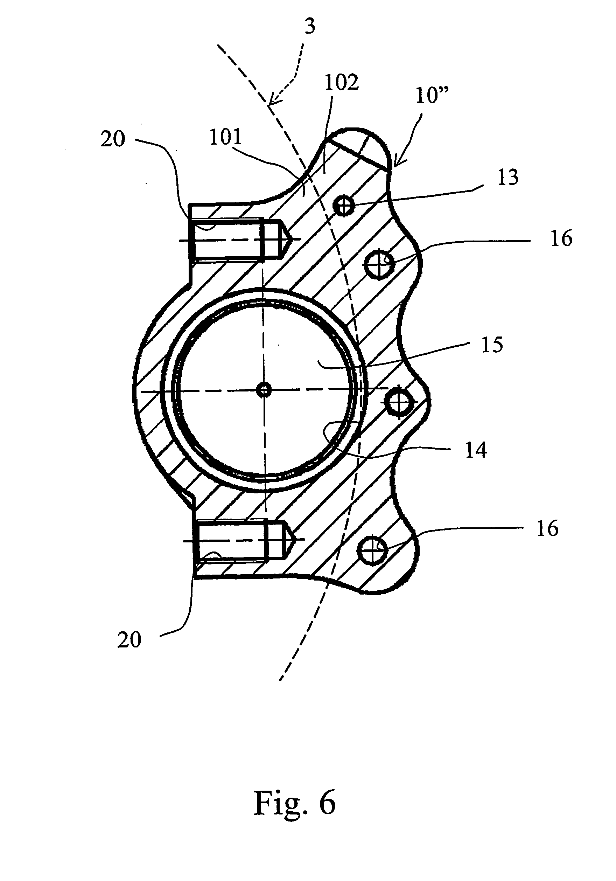

Each of the two half calipers 10' and 10" comprises a radially inner portion 101 which is intended to be disposed beside the brake disc 3 and a radially outer portion 102 (see Figure 6). It is thus intended to define unambiguously that which is radially inner as that which is closer to the axis of rotation of the brake disc and that which is radially outer as that which is farther from the axis of rotation of the brake disc.

At least one projecting portion 110 extends from the radially outer portion 102 of at least one of the two half calipers 10' or 10" towards the other side of the disc so as to meet the corresponding radially outer portion 102 of the other half caliper along a contact surface c-c. At least one bridge 11 is thus created radially outside of the brake disc 3; housings 16 are formed in the bridge 11 for at least one screw 12 for clamping the two half calipers together. A duct 13 suitable for establishing hydraulic communication between the cavities 14 which receive the two pistons 15 is also formed in the at least one bridge 11.

Two bridges 11 are preferably provided but, in order to satisfy specific design requirements, there may be one bridge or three or more bridges.

The contact surface c-c is asymmetric, that is, it is displaced axially from the median plane of the brake disc 3. In other words, for each of the bridges 11, the projecting portion 110 of one of the two half calipers is longer in the axial direction than the corresponding projecting portion of the other half caliper.

A particular case of the configuration just described is that in which there is no definable projecting portion 110 for one of the two half calipers. In that case, the entire bridge 11 is constituted by the projecting portion 110 of a single one of the two half calipers.

A recess 130 for housing a seal 131, for example, of the O-ring type, is provided in the contact surface c-c between the two half calipers 10' and 10", in the region of the duct 13 which puts the two cavities 14 into hydraulic communication.

This solution considerably reduces the thickness of the bridge 11 in comparison with known calipers. In fact, the recess 130, which has a diameter decidedly greater than that of the duct 13, is no longer formed along the bridge 11 but is displaced towards one of the two half calipers. The bridge can thus have decidedly less thickness; in fact it only has to contain the duct 13 and to maintain a wall around it of sufficient thickness to withstand the mechanical stresses to which the bridge is subjected.

The recess 130, on the other hand, may equally well be formed in either one of the two half calipers or even partially in one and partially in the other. In any case, the void which is left during the casting or subsequent removal of material in order to form the recess 130 does not prejudice the mechanical characteristics of the caliper 10. The recess 130 is in fact in a region of the half caliper 10' or 10" the dimensioning of which is more generous than that of the bridge 11 and which is not substantially adversely affected by the presence of the recess 130.

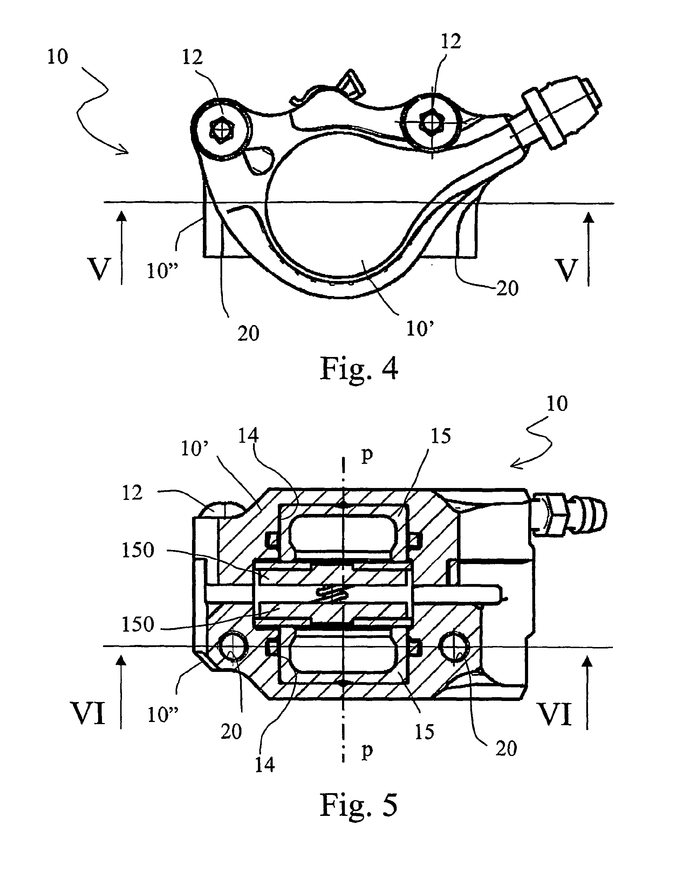

Each of the pistons 15 is housed slidably in the respective cavity 14 and can therefore translate along a single operating axis which is represented in Figure 5 by the axis p-p. Each piston 15 thus acts on the respective pad 150.

Seats 20 suitable for receiving the screws 21 for the fixing of the caliper to the support 1 are formed in the body of the half caliper 10". The support 1 comprises slots 4 which are arranged in a manner such that, when the brake caliper 10 is mounted, they coincide with the seats 20 and the fixing screws 21 can extend through the slots 4 and can be fitted in the seats 20.

There are preferably two screws 21 with respective seats 20 and slots 4 but, in order to satisfy specific design requirements, the number thereof may be limited to only one or may be increased to three or more.

The seats 20 are arranged so as to define a radial fixing in the sense defined above. In other words, the axes s-s of the fixing screws 21, once they are fitted, are arranged in a direction substantially perpendicular to the operating axis of the piston 15, or even in a direction substantially parallel to the plane defined by the brake disc 3.

Directions of the axis s-s which, owing to contingent constructional requirements, have to be slightly displaced from the perpendicular relative to the axis p-p of operation of the piston 15 or from the condition of parallelism to the plane defined by the brake disc 3 are intended to be included in this definition. Directions reverting to the conventional axial fitting of the caliper, on the other hand, are not included.

According to one embodiment, the seats 20 are aligned radially with the housings 16 and are arranged on the radially inner side relative to the housings 16.

More precisely, the seats 20 and the housings 16 are arranged in a manner such that imaginary extensions thereof intersect at least partially. In other words, if a cylinder is constructed on the seat 20, that is, if a cylinder is constructed which has, as its directrix, the outline of a cross-section of the seat 20 taken in a direction transverse the axis s-s and, as generators, lines parallel to the axis s-s, the cylinder intersects a similar cylinder constructed on the housing 16.

According to another embodiment, the seats 20 are accessible in a radial direction solely from the inner side towards the outer side. In other words, during the fitting of the caliper 10 on the support 1, the screws 21 can be placed in the respective seats 20 solely by moving them along the axes s-s of the seats in the direction from the centre of the brake disc 3 towards the bridge 11, which is indicated by the arrows A in Figures 2a and 2b. Access in the opposite direction is not possible because of the space occupied by other components of the caliper 10.

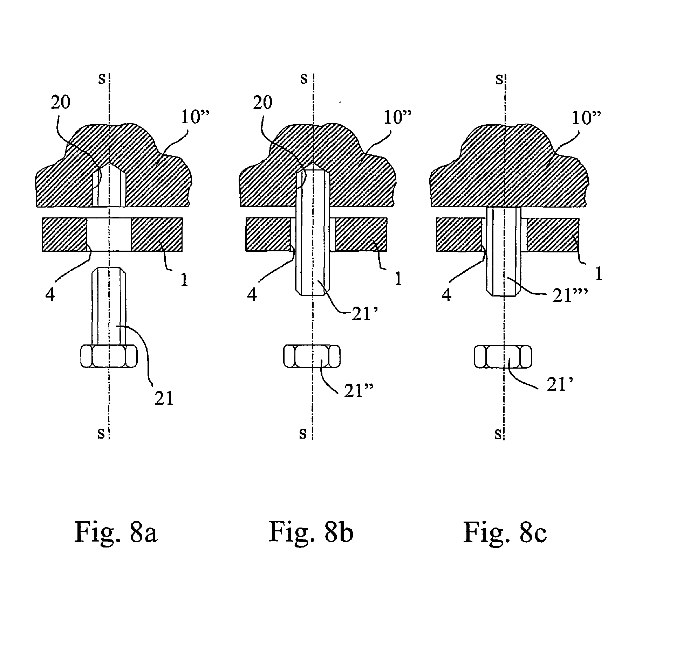

In particular, according to the particular embodiment shown in Figure 8a, the seats 20 are blind holes the sole openings of which, when the caliper is fitted, face radially towards the centre of the brake disc 3.

What has just been stated is also intended to describe similar embodiments in which, in order to fix the caliper to the support, so-called studs 21' are disposed in the seats 20. The studs 21' may be constituted by threaded rods which are screwed into the seats 20 prior to fitting and are left there for the operative life of the caliper. In this case, in fact, the fitting requires the insertion of the studs through the slots 4 formed in the support 1 and the subsequent use of a fixing nut 21" (see Figure 8b).

A solution which is clearly similar to that just described is that in which, instead of screwing the threaded rods 21' into the seats 20, the studs are produced by the provision of threaded rods 21'" directly during the casting of the half caliper 10".

According to a preferred embodiment of the caliper 10, the seats 20 are threaded. In this case, the corresponding seats formed in the support 1 are preferably smooth holes in which the screws 21 can slide freely.

According to a further embodiment, the seats 20 are parallel with one another.

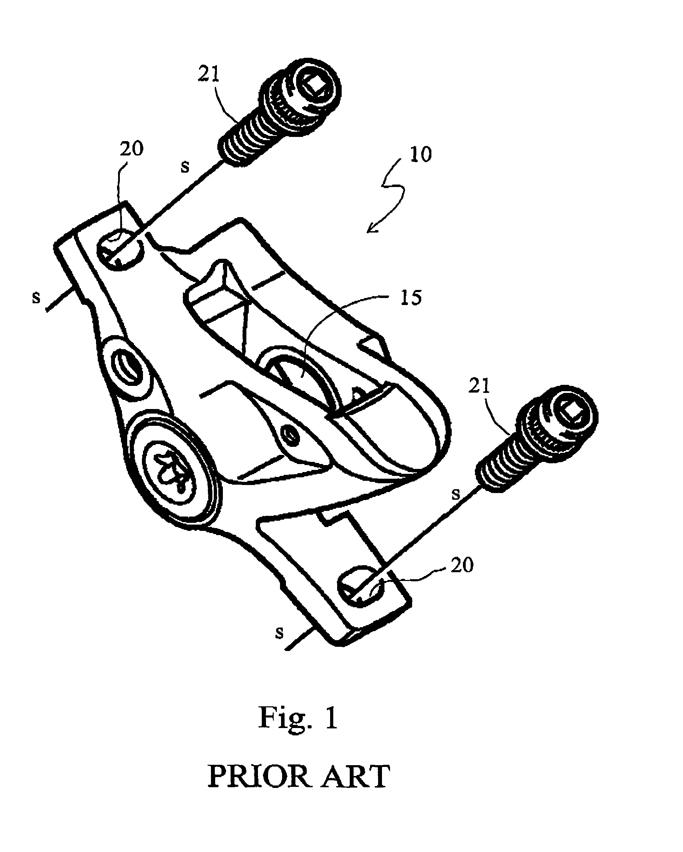

With reference to the embodiments described above and to Figures 1, 2a and 2b, it is clear that the arrangement of the seats 20 for the fixing screws 21 in accordance with the invention makes it possible to produce a much more compact caliper 10 which occupies a greatly reduced space in comparison with a conventional caliper, for given piston dimensions.

The support 1 intended for the caliper 10 according to the invention may advantageously be provided directly during the production of the fork.

It is thus possible to take full advantage of the already widely appreciated potential of the radial fixing of the brake caliper.

In order to satisfy contingent requirements, a person skilled in the art may apply adaptations and replacements of elements with other functionally equivalent elements to the above-described embodiments of the caliper without departing from the scope of the appended claims.

## Claims

1. A brake caliper (10) for a disc brake, comprising: a first half caliper (10') and a second half caliper (10"), each of the half calipers comprising a radially inner portion (101) which, in use, is intended to be disposed beside a brake disc (3) and comprises at least one cavity (14) housing at least one piston (15), and a radially outer portion (102), at least one of the radially outer portions (102) of the half calipers (10', 10") comprising, on the side with the piston (15), at least one projecting portion (110) which can meet the corresponding radially outer portion (102) of the other half caliper along a contact surface (c-c) so as to define at least one bridge (11), the at least one bridge comprising at least one duct (13) suitable for establishing hydraulic communication between the cavities (14), wherein the at least one projecting portion (110) of the at least one half caliper (10") is longer in the axial direction than the portion (110) projecting from the corresponding radially outer portion (102) of the other half caliper (10');
**characterized in that** in at least one radial section the radial extension of said contact surface (c-c) is greater than the radial extension of the portion of said bridge (11) which, in use, is intended to intersect the median plane of the brake disc (3).

2. A brake caliper (10) according to the preceding claim in which the at least one bridge (11) is constituted by the projecting portion (110) of a single one (10") of the half calipers.

3. A brake caliper (10) according to any one of the preceding claims in which a recess (130) suitable for housing a seal (131) is provided in the contact surface (c-c) in the region of the duct (13).

4. A brake caliper (10) according to Claim 3 in which the recess (130) is defined by the first half caliper (10').

5. A brake caliper (10) according to Claim 3 in which the recess (130) is defined by the second half caliper (10").

6. A brake caliper (10) according to Claim 3 in which the recess (130) is defined partially by the first half caliper (10') and partially by the second half caliper (10").

7. A kit comprising a brake caliper (10) according to any one of the preceding claims and a brake disc (3).

8. A kit according to the preceding claim in which the contact surface (c-c) is axially displaced from the median plane of the brake disc (3).

9. A bicycle comprising a kit according to Claim 7 or Claim 8.

## Patentansprüche

1. Bremssattel (10) für eine Scheibenbremse, der Folgendes umfasst: eine erste Sattelhälfte (10') und eine zweite Sattelhälfte (10"), wobei jede der Sattelhälften einen radial inneren Abschnitt (101) umfasst, der im Gebrauch neben einer Bremsscheibe (3) angeordnet sein soll und mindestens einen Hohlraum (14) umfasst, der mindestens einen Kolben (15) aufnimmt, und einen radial äußeren Abschnitt (102) umfasst, wobei mindestens einer der radial äußeren Abschnitte (102) der Sattelhälften (10', 10") auf der Seite mit dem Kolben (15) mindestens einen hervorstehenden Abschnitt (110) umfasst, der den entsprechenden radial äußeren Abschnitt (102) der anderen sattelhälfte entlang einer Kontaktfläche (c-c) berühren kann, so dass mindestens eine Brücke (11) definiert wird, wobei die mindestens eine Brücke mindestens einen Kanal (13) umfasst, der zum Herstellen einer hydraulischen Verbindung zwischen den Hohlräumen (14) geeignet ist, wobei der mindestens eine hervorstehende Abschnitt (110) der mindestens einen Sattelhälfte (10") in der Axialrichtung länger ist als der Abschnitt (110), der von dem entsprechenden radial äußeren Abschnitt (102) der anderen Sattelhälfte (10') hervorsteht;
**dadurch gekennzeichnet, dass** in mindestens einer radialen Sektion die radiale Fortsetzung der Kontaktfläche (c-c) größer ist die radiale Fortsetzung des Abschnitts der Brücke (11), die im Gebrauch die Medianebene der Bremsscheibe (3) schneiden soll.

2. Bremssattel (10) nach dem vorangehenden Anspruch, wobei die mindestens eine Brücke (11) durch den hervorstehenden Abschnitt (110) einer einzelnen (10") der Sattelhälften gebildet ist.

3. Bremssattel (10) nach einem der vorangehenden Ansprüche, wobei eine Ausnehmung (130), die zum Aufnehmen einer Dichtung (131) geeignet ist, in der Kontaktfläche (c-c) in der Region des Kanals (13) angeordnet ist.

4. Bremssattel (10) nach Anspruch 3, wobei die Ausnehmung (130) durch die erste Sattelhälfte (10') definiert ist.

5. Bremssattel (10) nach Anspruch 3, wobei die Ausnehmung (130) durch die zweite Sattelhälfte (10") definiert ist.

6. Bremssattel (10) nach Anspruch 3, wobei die Ausnehmung (130) teilweise durch die erste Sattelhälfte (10') und teilweise durch die zweite Sattelhälfte (10") definiert ist.

7. Satz, der einen Bremssattel (10) nach einem der vorangehenden Ansprüche und eine Bremsscheibe (3) umfasst.

8. Satz nach dem vorangehenden Anspruch, wobei die Kontaktfläche (c-c) axial von der Medianebene der Bremsscheibe (3) versetzt ist.

9. Fahrrad, das einen Satz nach Anspruch 7 oder Anspruch 8 umfasst.

## Revendications

1. Etrier de frein (10) pour un frein à disque comprenant :
un premier demi-étrier (10') et un second demi-étrier (10"), chacun des demi-étriers comprenant une partie radialement intérieure (101) qui, en utilisation, est destinée à être disposée à côté d'un disque de frein (3) et qui présente au moins un évidement (14) logeant au moins un piston (15), et une partie radialement extérieure (102), au moins une des parties radialement extérieures (102) des demi-étriers (10', 10") comprenant, sur la face présentant le piston (15), au moins une partie saillante (110) qui peut se joindre à la partie radialement extérieure correspondante (102) de l'autre demi-étrier le long d'une surface de contact (c-c) de façon à définir au moins un pont (11), l'au moins un pont comprenant au moins un conduit (13) approprié pour établir une communication hydraulique entre les cavités (14), dans lequel l'au moins une partie saillante (110) de l'au moins un demi-étrier (10") est plus longue dans la direction axiale que la partie (110) faisant saillie de la partie radialement extérieure correspondante (102) de l'autre demi-étrier (10') ;
**caractérisé en ce que** dans au moins une section radiale l'extension radiale de ladite surface de contact (c-c) est plus importante que l'extension radiale de la partie dudit pont (11) qui, en utilisation, est destinée à croiser le plan médian du disque de frein (3).

2. Etrier de frein (10) selon la revendication précédente, dans lequel l'au moins un pont (11) est constitué par la partie saillante (110) d'un seul (10") des demi-étriers.

3. Etrier de frein (10) selon une quelconque des revendications précédentes, dans lequel un évidement (110) approprié pour loger une garniture d'étanchéité (131) est prévu dans la surface de contact (c-c) dans la région du conduit (13).

4. Etrier de frein (10) selon la revendication 3, dans lequel l'évidement (130) est défini par le premier demi-étrier (10').

5. Etrier de hein (10) selon la revendication 3, dans lequel l'évidement (130) est défini par le second demi-étsier (10").

6. Etrier de frein (10) selon la revendication 3, dans lequel l'évidement (130) est défini partiellement par le premier demi-étrier (10') et partiellement par le second demi-étrier (10").

7. Ensemble comprenant un étrier de frein (10) selon une quelconque des revendications précédentes et un disque de frein (3).

8. Ensemble selon la revendication précédente, dans lequel la surface de contact (c-c) est déportée axialement par rapport au plan médian du disque de frein (3).

9. Bicyclette comprenant un ensemble selon la revendication 7 ou la revendication 8.
